# EUROPEAN PATENT SPECIFICATION

(11) **EP 0 743 970 B1**
(45) Date of publication and mention of the grant of the patent: **04.12.2002**
(21) Application number: 95911679.9
(22) Date of filing: 09.02.1995
(51) Int. Cl.: C09D 167/00, C09D 133/06, C09D 5/03

(54) **THERMOSETTING POWDER COATING COMPOSITIONS**
WÄRMEHÄRTENDE PULVERBESCHICHTUNGSZUSAMMENSETZUNGEN
COMPOSITIONS DE REVETEMENT PULVERULENT THERMODURCISSABLES

(30) Priority: 10.02.1994 US 195890
(43) Date of publication of application: 27.11.1996
(73) Proprietor: CYTEC TECHNOLOGY CORP., Wilmington, Delaware 19801 (US)
(72) Inventor: GSCHNEIDNER, David, Stamford, CT 06904 (US); BOLDIZAR, Leslie, Stamford, CT 06902 (US); JACOBS, William, III, Bethel, CT 06801 (US); ALEXANIAN, Vazken, Weston, CT 06883 (US)
(74) Representative: Diehl, Hermann, Dr. Dipl.-Phys.
(86) International application number: US9501732
(87) International publication number: WO95021898

(56) References cited:
- EP-A- 0 453 730
- EP-A- 0 565 924

## Description

### BACKGROUND OF THE INVENTION

### Field of the Invention

This invention relates to thermosetting powder coating compositions which can provide durable, substantially defect-free films upon curing. The thermosetting powder coating compositions in accordance with the present invention contain, in their broadest concept, a substantially acid-free active hydrogen groups-containing backbone resin component, and a crosslinker component comprising a solid tris-alkoxymethyl melamine crosslinking agent.

### Description of the Related Art

Currently, many industrial coatings are organic solvent-based liquid systems which emit significant amounts of volatile organic compounds (VOC) during the curing process, creating potential health and safety hazards and environmental pollution problems. Because of the health, safety and environmental concerns associated with the widespread use of organic solvent-based systems by the coatings industry, powder coatings have become increasingly important in recent years.

A variety of powder coatings compositions are known for functional and/or decorative applications. See, for example, US3730930, US3752870, US3787521, US3781380, US4002699, US4011381, US4118437, US4197353, US4214040, US4271277, US4341819, US4346144, US4352924, US5097006, US5116892, US5256713, US5321103, US5380804, EP-A-0256369, EP-A-0480120, EP-A-0575034, commonly owned United States Patent Application Serial No. 08/195,890 (filed February 10, 1994) and Research Disclosure No. 351021, all of which are incorporated by reference herein for all purposes as if fully set forth. In these references are disclosed a wide variety of backbone resins and a variety of crosslinkers therefor including, for example, di- and polycarboxylic acids, blocked isocyanates and amino resins such as substituted melamines, ureas, benzoguanamines and glycolurils. The present invention is concerned with the amino resin crosslinkers and, in particular, the substituted melamine crosslinkers.

In order to form substantially surface defect-free films from powder coating compositions, it is believed to be necessary that the coatings, during the cure process, maintain suitable flow out and possess other suitable cure characteristics. Typically, during cure a powder coating composition which is applied to a surface first melts and, upon continued heating, flows out onto the substrate due to decreasing viscosity. At some point in the process, the crosslinking reaction begins with a release of volatile by-products and ultimate increase of viscosity due to the increasing number of crosslinks. If the viscosity of the powder coating melt remains low enough for a sufficient penod of time during cure, the volatile by-products have a chance to escape. If, however, the viscosity of the crosslinking system increases too quickly, insufficient flow-out may occur along with the trapping of the volatile by-products, resulting in surface defects such as uneven textures, blisters, craters and pinholes. The result is a film of poor appearance and, in some cases, compromised physical and chemical resistance properties. As film thickness increases, any existing problems are exacerbated.

Due to the cure characteristics (e.g., high reactivity) of substituted melamine crosslinkers (as compared to substituted glycolurils and blocked isocyanates), their use has been somewhat limited in powder coatings applications. This is particularly so for the highly reactive tris-alkoxymethyl melamine crosslinkers.

It has been reported in previously incorporated US4002699 that powder coatings have been prepared with certain generically described "tris-atkoxymethyl melamine" crosslinkers and hydroxy-functional backbone resins. The hydroxy-functional backbone resins are characterized either by a relatively high acid number, and/or an acid catalyst is added to the coating system. These powder coatings, when applied to a substrate and cured, are said in the reference to provide films of good appearance and solvent resistance. No specifics, however, are provided on the characteristics of the disclosed "tris-alkoxymethyl melamines" (other than the alkoxy group), and film thickness of the resulting films is not mentioned. In fact, as set forth later in the comparative examples, it has been found that substantially defect free thicker films (greater than about 1.5 mils (about 38 µm)) cannot be obtained under normal cure conditions from systems apparently similar to those as described in the reference, utilizing tris-alkoxymethyl melamine crosslinkers as described in further detail below.

Surprisingly, it has now been discovered that powder coating systems can be formulated with certain tris-alkoxymethyl melamine crosslinkers under specific conditions, which powder coatings are capable of providing substantially surface defect-free thicker films when cured under normal powder coatings cure conditions.

### SUMMARY OF THE INVENTION

As indicated above, the present invention is a thermosetting powder coating composition as claimed in claim 1, comprising:
(i) a substantially acid-free active hydrogen groups-containing backbone resin component, and
(ii) a crosslinker component comprising a solid tris-alkoxymethyl melamine crosslinking agent.

The present invention is further a method of coating a substrate by applying onto a substrate the thermosetting powder coating composition of the present invention then heat curing the so applied coating, as claimed in claim 10.

Still further, the present invention is an article coated with a crosslinked film as claimed in claim 11. Such crosslinked films possess good hardness, impact resistance and solvent resistance, and are substantially surface defect-free with desirable appearance characteristics such as gloss and lack of pinholes or blisters, even at greater film thicknesses.

Finally, the present invention relates to the several uses in which the present thermosetting powder coating compositions can be utilized.

These and other features and advantages of the present invention will be more readily understood by those of ordinary skill in the art from a reading of the following detailed description.

### DETAILED DESCRIPTION OF THE PREFERRED EMBODIMENTS

### The Substantially Acid-Free Active Hydrogen Groups-Containing Backbone Resin Component

The substantially acid-free active hydrogen groups-containing backbone resin component comprises either (a) one or more active hydrogen groups-containing resins which in total are substantially acid-free, or (b) one or more of active hydrogen groups-containing backbone resins which in total are not substantially acid free and, additionally; a basic additive other than an alkoxymethyl melamine in an amount at least sufficient to render the active hydrogen groups-containing resin component substantially acid-free.

By "substantially acid-free" is meant a very low total resin acid number, which is less than about 4 mg KOH/g resin, and especially about 1 mg KOH/g resin or less. "Substantially acid-free" may be an inherent condition of the resin itself or may, as indicated above, be achieved through the addition of a basic additive as further described below.

The active hydrogen groups-containing resins are of an oligomeric or polymeric nature, containing at least two active hydrogens capable of reacting with the tris-alkoxymethyl melamines under normal powder coatings cure conditions (generally between about 100°C to about 250°C). Active hydrogen functionality is well-known to those of ordinary skill in the art, and preferred examples include hydroxy, amido and mercapto groups, as well as groups convertible thereto. Hydroxyfunctional materials are especially preferred. Illustrative examples of polyfunctional active hydrogen containing materials include acrylic resins, polyester resins and a mixture thereof.

Hydroxyfunctional acrylic resins for powder coatings applications are generally well known to those skilled in the art, and may be obtained by the copolymerization of acrylic or methacrylic esters with hydroxyfunctional acrylic or methacrylic esters such as hydroxyethyl acrylate or methacrylate, optionally with simultaneous use of additional vinyl compounds such as, for example, styrene.

Hydroxyfunctional polyester resins for powder coatings applications are also generally well known to those skilled in the art. Suitable such polyester resins may be obtained, for example, by the reaction of polycarboxylic acids with excess quantities of polyhydric alcohols.

Suitable hydroxyfunctional active hydrogen containing materials may also be epoxy or polyurethane prepolymers, alkyds, and the like.

In general, such resins may have pendent or terminal hydroxyl functionality and preferably have the following characteristics:
weight average molecular weights (Mw) of from about 750 to about 7000, and
more preferably from about 2000 to about 5000; and
hydroxyl numbers of from about 20 to about 100 mg KOH/g resin, more preferably from about 25 to about 60 mg KOH/g resin, and especially from about 25 to about 40 mg KOH/g resin.

A subset of resins having a particular utility for powder coating compositions are crystalline polyesters having low melt viscosities. These resins are derived from 1,4-butanediol and trans-1,4-cyclohexanedicarboxylic acids, and are more fully described in previously incorporated US4352924. The polymers of this reference tend to have lower melt viscosities and generally give better melt flow in powder coating compositions.
Other suitable hydroxyl functional resins will be readily recognized by those of ordinary skill in the art.

Because the curable compositions of the invention are intended for powder coatings applications, the polyfunctional active hydrogen containing materials should preferably be solid at ambient temperatures and should remain solids up to about 40°C to preserve the powdery state of the curable composition and prevent lumping.
Materials having solid like characteristics are most preferred since liquids and semi-solids require additional effort to avoid unwanted agglomeration in the preparation and storage of the powder coating compositions. Non-solid or semi-solid materials are also usable if, for example, they are adsorbed on organic and inorganic solid supports such as, for example, disclosed in the previously incorporated US5321103, including supports comprising colloidal condensation polymers.

The polyfunctional active hydrogen containing materials usable in this invention preferably have glass transition temperatures (Tg) ranging from about 40°C to about 150°C, and softening points ranging from about 55°C to about 75°C. Upon heating, they should become fluid to permit formation of low viscosity melts which allow efficient mixing of the components of the curable composition prior to crosslinking. It is, therefore, desirable that the polyfunctional active hydrogen containing materials become fluid at temperatures ranging from about 80°C to about 140°C.

As indicated above, the substantially acid-free active hydrogen groups-containing backbone resin component comprises either (a) one or more active hydrogen groups-containing resins which in total are substantially acid-free, or (b) one or more of active hydrogen groups-containing backbone resins which in total are not substantially acid free and, additionally, a basic additive in an amount at least sufficient to render the active hydrogen groups-containing resin component substantially acid-free.

As an example of a commercially available active hydrogen groups-containing resin, which in and of itself is "substantially acid free," may be mentioned RUCOTE® 101 polyester resin, a product of Ruco Polymer Corporation, Hicksville, N.Y., which has the following properties:

| | |
|---|---|
| Hydroxyl Number | 29 |
| Equivalent Weight | 2000 |
| Softening Point (°C) | 120 |
| Glass Transition Temperature (Tg)(°C) | 53 |
| Acid Value (mg KOH/g) | 1 |
| ICI Viscosity (200°C, Poise) | 53 |

As examples of commercially available active hydrogen groups-containing resins, which in and of themselves are not "substantially acid free," may be mentioned the following:
ALFTALAT® AN 745 hydroxyfunctional polyester resin, a product of Hoechst Corporation, having the following properties:

| | |
|---|---|
| Hydroxyl Number | 30 |
| Equivalent Weight | 1870 |
| Glass Transition Temperature (Tg)(°C) | 55 |
| Acid Value (mg KOH/g) | 5 |
| ICI Viscosity (200°C, Poise) | 50-65 |

JONCRYL® SCX-800 A acrylic resin, a product of S. C. Johnson and Sons, Inc., Racine, WI, having the following physical and chemical properties:

| | |
|---|---|
| Hydroxyl Number | 98 |
| Equivalent Weight | 43 |
| Softening Point (°C) | 100 |
| Glass Transition Temperature (Tg)(°C) | 43 |
| Acid Value (mg KOH/g) | 15 |
| ICI Viscosity (200°C, Poise) | 25 |

JONCRYL® SCX-800 B acrylic resin, a product of S. C. Johnson and Sons, Inc., Racine, WI, having the following physical and chemical properties:

| | |
|---|---|
| Hydroxyl Number | 40 |
| Equivalent Weight | 1402 |
| Softening Point (°C) | 107 |
| Glass Transition Temperature (Tg)(°C) | 43 |
| Acid Value (mg KOH/g) | 15-20 |
| ICI Viscosity (200°C, Poise) | 45-50 |

ARAKOTE® 3010 carboxy terminated polyester, a product of Ciba-Geigy Corporation, Ardsley, N.Y., having the following properties:

| | |
|---|---|
| Hydroxyl Number | ≤ 7 |
| Carboxy Equivalent Weight | 1800 |
| Glass Transition Temperature (Tg)(°C) | 62 |
| Acid Value (mg KOH/g) | 27-33 |
| ICI Viscosity (200°C, Poise) | 35-60 |

CARGILL® 3000 polyester resin, a product of Cargill Corporation, Carpentersville, IL, having the following properties:

| | |
|---|---|
| Hydroxyl Number | 50 |
| Equivalent Weight | 1035 |
| Glass Transition Temperature (Tg)(°C) | 56 |
| Acid Value (mg KOHIg) | 15 |

### The Basic Additive

When the one or more active hydrogen groups-containing backbone resins in total are not substantially acid free, the substantially acid-free active hydrogen groups-containing backbone resin component further comprises a basic additive other than an alkoxymethyl melamine in an amount at least sufficient to render the active hydrogen groups-containing resin component substantially acid-free.

Without being bound by any theory or structure, it is believed that the beneficial role of the basic additive includes controlling the cure rate. Basic additives useful in the curable compositions of the invention are typically strong bases which surprisingly not only do not promote crosslinking but retard crosslinking to an extent sufficient to allow the curable powder compositions of the invention to fuse, flow out, and form a uniform coating on the substrate. The longer gel times obtained in the presence of basic additives is indicative of less crosslinking at this stage, a condition which permits the formation of a uniform, substantially surface defect-free film on the substrate. The coating is thereafter fully cured by further application of heat.

In order to obtain thicker films, therefore, the basic additive may also be utilized whether or not the active hydrogen groups-containing backbone resins are in total substantially acid free, an in amounts in excess of that required to render the active hydrogen groups-containing resin component substantially acid-free.

The basic additive is typically selected from the group consisting of an alkali metal salt, a quatemary ammonium salt, a quaternary phosphonium salt, sulfonium salt, an amine, an imine, an amidine, a guanidine, and a mixture thereof. The alkali metal salt may be a lithium, sodium, or potassium salt, having a counteranion such as hydride, hydroxide, alkoxide, aryloxide, carboxylate, carbonate, and a mixture thereof. The amines usable as the basic additive include primary, secondary, and tertiary amines. Tertiary amines are preferred to primary and secondary amines and include trialkyl amines, triaryl amines, alkyl diaryl amines, dialkyl aryl amines, cyclic amines, bicyclic amines, polycyclic amines, heteroaromatic amines and mixtures thereof, including heteroaromatic amines such as 4-pyrrolidinopyridine, 4-piperidinopyridine, and 4-morpholinopyridine and bicyclic amines such as 1,4-diaza-(2.2.2)-bicyclooctane (DABCO). Generally, alkylated guanidines such as tetramethylguanidine and quaternary salts such as quaternary ammonium hydroxide salts are preferred.

### Tris-Alkoxymethyl Melamine Crosslinking Agent

The tris-alkoxymethyl melamines useful as crosslinking agents in the powder coating compositions of this invention are solid compounds which are generally known and described in, for example, U.S. Patent Nos. 2397451, 2416884, 2454078, 2978890, 3936547 and 4016336, all of which are incorporated by reference herein for all purposes as if fully set forth. They are, in a general sense, the etherification products of trimethylol melamine with an alcohol, and preferably a 1 to 8 carbon alcohol. Trimethylol melamine may be prepared by methylolating melamine with three equivalents of formaldehyde as described in the previously incorporated U.S. Patent No. 2978890.

In reality, the tris-alkoxymethyl melamine crosslinkers can be a complex mixture of products including, for example, symmetrical monomeric tris-alkoxymethyl melamine (N,N',N"-tris-alkoxymethyl melamine), asymmetric monomeric tris-alkoxymethyl melamines (e.g., N,N-disubstituted versions), N,N'-bis-alkoxymethyl melamines, N,N',N",N"-tetrakis-alkoxymethyl melamines, oligomers derived from the di-, tri-, and tetra-substituted derivatives, and other variations recognizable by those of ordinary skill in the relevant art. The tris-alkoxymethyl melamine crosslinker for use in the present invention is predominantly monomeric, and more preferably comprises at least about 80 wt% monomer, and especially at least about 90 wt% monomer. Wt% monomer, for the purposes of the present invention, is equated with the area percent of the monomeric portion of a curve determined by analysis of the tris-alkoxymethyl melamine crosslinker by well-known high performance size exclusion chromatography techniques.

Further, the tris-alkoxymethyl melamine crosslinker comprises at least 40 wt%, and preferably at least about 50 wt%, symmetrical tits-alkoxymethyl melamine. Wt% symmetrical tris-alkoxymethyl melamine, for the purposes of the present invention, is determined via well-known high performance liquid chromatography techniques using a symmetrical tris-alkoxymethyl melamine standard.

Overall, the formaldehyde content of the Iris-alkoxymethyl melamine crosslinker is in the range of from 2.8 to 3.2, and especially about 3.0, moles formaldehyde per mole of melamine (MF), with a degree of etherification (Me) in the range of 2.8 to 3.2, and especially about 3.0. The Me is substantially equal to the MF, with the free methylol content of the tris-alkoxymethyl melamine crosslinker being less than 3 moles per 100 moles of melamine.

Each alkoxy group of the present tris-alkoxymethyl melamines is independently based on an alkyl group preferably selected from the group consisting of linear, branched, or cyclic alkyls of 1 to 20 carbon atoms. Especially preferred alkyl groups are lower alkyls of 1 to 8 carbon atoms including, for example, methyl, ethyl, 1-propyl, 2-propyl, 1-butyl, 2-butyl, iso-butyl, tert-butyl, 1-pentyl, 1-hexyl, cyclohexyl, 2-ethyl-1-hexyl, and the like. The most preferred alkyls are methyl and ethyl groups.

As indicated above, the tris-alkoxymethyl melamines are solids at ambient temperatures.

### Optional Ingredients

The thermosetting powder coating compositions of the invention may also include varying amounts of other conventional additives well known to those of ordinary skilled in the art of powder coating compositions, as exemplified by the previously incorporated references. Included among these are additives such as fillers, antioxidants, ultraviolet light stabilizers, pigments such as, for example, TiO₂ pigment, flow control agents, plasticizers, mold release agents, corrosion inhibitors, and the like. Additives such as benzoin, Modaflow® Powder III Resin Modifier (Monsanto), or Resiflow® P-67 Flow Control Agent (Estron Chemical, Inc.) are preferably incorporated into the powders at about 1 to about 4 weight percent level based on the total powder coating weight.

### Proportions of Components

The relative amounts of the components in accordance with the present invention are not critical. Any proportion of ingredients may be employed that results in a curable powder coating composition capable of providing a durable, substantially surface defect-free finish after curing.

The amount of amino resin crosslinker employed is typically in the range of from about 3 to about 30 wt%, and preferably in the range of from about 15 to about 20 wt%, of the binder which, for the purposes of the present invention, is the combined weight of the crosslinker and the active hydrogen containing resins. Conversely, the amount of the active hydrogen containing material employed is typically in the range of from about 70 to about 97 wt%, and preferably in the range of from about 80 to about 85 wt%. of the binder,

The amount of the basic additive in the curable composition, as indicated above, can vary greatly depending on the components as well as the strength of the basic additive. Typically, when utilized, amounts less than or equal to 3.0 weight percent (based on the active hydrogen groups-containing resins) should provide satisfactory results. When the preferred basic additives are utilized, amounts of from about 0.01 to about 0.5 weight percent are usually sufficient.

### Preparation of Powder Coating Compositions

The powder coating compositions in accordance with the present invention may be prepared by any well-known method, for example, by dry mixing the components in a mixer or blender followed by compounding in an extruder and granulating, grinding and then screening to obtain a powder of suitable mesh size for powder coating. Alternatively, some or all of the components may be dissolved in a solvent such as methylene chloride and spray dried by well known techniques. Moreover, it may be preferable to masterbatch the crosslinking agent and the hydroxyl functional resin prior to mixing the optional components of the composition in a manner well known to a person skilled in the art.

### Method of Coating

Substrates may be coated with the powder coating compositions of the present invention by applying the powder coating compositions then heat curing the same. The powder coatings may be applied by any well-known application means such as a powder gun, electrostatic deposition or deposition from a fluidized bed. After application, the powder coating is heated to a temperature sufficient to cause the particles to flow and cure to form a coating by crosslinking. Depending on the particular selection of components, the coated substrate is heated typically to temperatures between about 100°C and about 250°C, preferably between about 110°C and about 230°C, more preferably between about 150°C and about 230°C, and especially between about 170°C to about 200°C.

### Uses of the Powder Coating Compositions

The powder coating compositions of the present invention are generally capable of producing durable, substantially surface defect-free films of thicknesses over about 1.5 mils (about 38 µm), and are particularly suited for applications requiring film thicknesses in the range of from about 1.5 mils (about 38 µm) to about 3.0 mils (about 76 µm). Such applications include a wide variety of general industry uses including, for example, automotive coatings (e.g., clearcoat), coil coatings, appliance coatings and can coatings. Because the present coatings are thermosetting, suitable substrates must be resistant to elevated temperatures, which includes most notably metal substrates.

The examples which follow are intended to be illustrative of certain preferred embodiments of the invention and are not to be construed to limit the invention in any manner. In the following examples, all amounts are expressed as parts by weight.

### COMPARATIVE EXAMPLE 1

A white pigmented powder coating composition containing the following ingredients was formulated:

| | |
|---|---|
| Crylcoat® 4668 Hydroxyfunctional Polyester Resin⁽¹⁾ | 68.0 parts |
| Tris(methoxymethyl)melamine⁽²⁾ | 12.0 parts |
| Titanium Dioxide | 32.0 parts |
| Benzoin | 1.1 parts |
| Modaflow® 2000 ⁽³⁾ | 1.0 parts |

| | |
|---|---|
| (1) A polyester with an OH number of 22, available from UCB Chemicals USA, Smyma, GA. | |
| (2) MF_{3.0}Me_{3.0}, at least 90 wt% monomeric, at least 45 wt% symmetrical. | |
| (3) An acrylic copolymer on silica available from Monsanto Company, St.Louis, MO. | |

The ingredients were premixed in a Waring blender, melt-mixed on a Brabender two-roll mill, crushed in a Waring blender, milled in a Mikro-ACM mill classifier and sprayed electrostatically onto Bonderite 1000 panels with a Wagner gun.

The resulting powder coating was cured by heating at 190°C for a period of 20 min. The results are summarized in Table 2. The resulting powder coating was also cured by heating at 175°C for a period of 20 min. The 175°C cure results are summarized in Table 4. Gel time and film thickness at which surface defects (i.e., blisters or pinholes) begin to appear (175°C, 20 min. cure conditions) are depicted in Table I.

### COMPARATIVE EXAMPLE 2

Comparative Example 1 was repeated in its entirety using the following formulation:

| | |
|---|---|
| Crylcoat 4668® Hydroxyfunctional Polyester Resin⁽¹⁾ | 68.00 parts |
| Tris(methoxymethyl)melamine⁽²⁾ | 12.00 parts |
| Titanium Dioxide | 32.20 parts |
| Benzoin | 1.14 parts |
| Resiflow® P-67⁽³⁾ | 1.05 parts |
| X-320® Amine Blocked Sulfonic Acid Catalyst⁽⁴⁾ | 0.36 parts |

| | |
|---|---|
| (1) A polyester with an OH number of 22, available from UCB Chemicals USA, Smyma, GA. | |
| (2) MF_{3.0}Me_{3.0}, at least 90 wt% monomeric, at least 45 wt% symmetrical. | |
| (3) An acrylic copolymer on silica available from Estron Chemical, Inc., Calvert City, KY. | |
| (4) 2-methylamino-2-methyl-1-propanol salt of para-toluene sulfonic acid in 50% isobutyl alcohol, available from Cytec Industries, Inc. West Paterson, N.J. | |

The ingredients were mixed, and the resulting powder coatings applied, cured and tested, as in Comparative Example 1. The results are summarized in Table 2 (190°C, 20 minutes), Table 4 (175°C, 20 minutes) and Table 1 (gel time and film thickness).

### COMPARATIVE EXAMPLE 3

Comparative Example 1 was repeated in its entirety using the following formulation:

| | |
|---|---|
| Kuotex® EL-1200® Hydroxyfunctional Polyester Resin⁽¹⁾ | 67.0 parts |
| Tris(methoxymethyl)melamine⁽²⁾ | 13.0 parts |
| Titanium Dioxide | 32.0 parts |
| Benzoin | 1.1 parts |
| Resiflow® P-67⁽³⁾ | 1.0 parts |

| | |
|---|---|
| (1) A polyester with an OH number of 40, available from Sun Polymer, Inc. | |
| (2) MF₃₀Me_{3.0}, at least 90 wt% monomeric, at least 45 wt% symmetrical. | |
| (3) An acrylic copolymer on silica available from Estron Chemical, Inc., Calvert City, KY. | |

The ingredients were mixed, and the resulting powder coatings applied, cured and tested, as in Comparative Example 1. The results are summarized in Table 2 (190°C, 20 minutes), Table 4 (175°C, 20 minutes) and Table 1 (gel time and film thickness).

### EXAMPLE 1

Comparative Example 1 was repeated in its entirety using the following formulation:

| | |
|---|---|
| Kuotex® EL-1200 Hydroxyfunctional Polyester Resin⁽¹⁾ | 68.0 parts |
| Tris(methoxymethyl)melamine⁽²⁾ | 12.0 parts |
| Titanium Dioxide | 32.0 parts |
| Benzoin | 1.1 parts |
| Resiflow® P-67⁽³⁾ | 1.0 parts |
| Trimethylphenylammonium Hydroxide⁽⁴⁾ | 1.6 parts |

| | |
|---|---|
| (1) A polyester with a OH number of 40, a product of Chan Sieh Enterprises Co., LTD., Taiwan, distributed by Peninsula Polymers, Ml, USA. | |
| (2) MF_{3.0}Me_{3.0}, at least 90 wt% monomeric, at least 45 wt% symmetrical. | |
| (3) An acrylic copolymer on silica available from Estron Chemical, Inc., Calvert City, KY. | |
| (4) 25 wt % solution. | |

The ingredients were mixed, and the resulting powder coatings applied, cured and tested, as in Comparative Example 1. The results are summarized in Table 3 (190°C, 20 minutes), Table 5 (175°C, 20 minutes) and Table 1 (gel time and film thickness).

### EXAMPLE 2

Comparative Example 1 was repeated in its entirety using the following formulation:

| | |
|---|---|
| Crylcoat® 4668 Hydroxyfunctional Polyester Resin⁽¹⁾ | 69.0 parts |
| Tris(methoxymethyl)melamine⁽²⁾ | 11.0 parts |
| Titanium Dioxide | 32.0 parts |
| Benzoin | 1.1 parts |
| Modaflow® 2000⁽³⁾ | 1.0 parts |
| Tetramethylguanidine | 1.6 parts |

| | |
|---|---|
| (1) A polyester with an OH number of 22. available from UCB Chemicals USA, Smyma, GA. | |
| (2) MF_{3.0}Me_{3.0}, at least 90 wt% monomeric, at least 45 wt% symmetrical. | |
| (3) An acrylic copolymer on silica available from Monsanto Company, St.Louis, MO. | |

The ingredients were mixed, and the resulting powder coatings applied, cured and tested, as in Comparative Example 1. The results are summarized in Table 3 (190°C, 20 minutes), Table 5 (175°C, 20 minutes) and Table 1 (gel time and film thickness).

### EXAMPLE 3

Comparative Example 1 was in its entirety repeated using the following formulation:

| | |
|---|---|
| Crylcoat® 4668 Hydroxyfunctional Polyester Resin⁽¹⁾ | 68.0 parts |
| Tris(methoxymethyl)melamine⁽²⁾ | 12.0 parts |
| Titanium Dioxide | 32.1 parts |
| Benzoin | 1.1 parts |
| Modaflow® 2000⁽³⁾ | 1.0 parts |
| Trimethylphenylammonium Hydroxide⁽⁴⁾ | 1.3 parts |

| | |
|---|---|
| (1) A polyester with an OH number of 22, available from UCB Chemicals USA, Smyma, GA. | |
| (2) MF_{3.0}Me_{3.0}, at least 90 wt% monomeric, at least 45 wt% symmetrical. | |
| (3) An acrylic copolymer on silica available from Monsanto Company, St.Louis, MO | |
| (4) 25 wt % solution | |

The ingredients were mixed, and the resulting powder coatings applied, cured and tested, as in Comparative Example 1. The results are summarized in Table 3 (190°C, 20 minutes), Table 5 (175°C, 20 minutes) and Table 1 (gel time and film thickness).

### EXAMPLE 4

Comparative Example 1 was repeated in its entirety using the following formulation:

| | |
|---|---|
| Rucote® 101 Hydroxyfunctional Polyester Resin⁽¹⁾ | 68.0 parts |
| Tris(methoxymethyl)melamine⁽²⁾ | 12.0 parts |
| Titanium Dioxide | 32.2 parts |
| Benzoin | 1.1 parts |
| Resiflow P-67⁽³⁾ | 1.0 parts |

| | |
|---|---|
| (1) A polyester with an OH number of 30 and an acid number of 1, available from Ruco Polymer Co., Hicksville, NY. | |
| (2) MF_{3.0}Me_{3.0}, at least 90 wt% monomeric, at least 45 wt% symmetrical. | |
| (3) An acrylic copolymer on silica available from Estron Chemical, Inc., Calvert City, KY. | |

The ingredients were mixed, and the resulting powder coatings applied, cured and tested, as in Comparative Example 1. The results are summarized in Table 6 (190°C, 20 minutes and 175°C, 20 minutes) and Table 1 (gel time and film thickness).

**TABLE 1**

| **GEL TIME**^{**(a)**}**AND THE THICKNESSES AT WHICH DEFECTS BEGIN TO APPEAR** | | |
|---|---|---|
| **EXAMPLE** | **GEL TIME** | **THICKNESS TO DEFECTS** |
| Comparative 1 | 55 sec | 1.0 mils (25 µm) |
| Comparative 2 | 45 sec | 1.0 mils (25 µm) |
| Comparative 3 | 45 sec | 1.0 mils (25 µm) |
| 1 | 75 sec | 1.7 mils (43 µm) |
| 2 | 113 sec | 1.9 mils (48 µm) |
| 3 | 108 sec | 2.1 mils (53 µm) |
| 4 | 50 sec | 1.7 mils (43 µm) |

| | | |
|---|---|---|
| ^{(a)} at 200°C, Using Powder Coating Institute Procedure No. 6 "Gel Time Reactivity", Powder Coating Institute, Alexandria, VA 22314, USA. | | |

**TABLE 2**

| **FILM AND RESISTANCE PROPERTIES - CURED AT 190°C FOR 20 MINUTES** | | | |
|---|---|---|---|
| **COMP. EXAMPLE** | 1 | 2 | 3 |
| **HARDNESS** | | | |
| Knoop | 8.9 | 17.2 | 16.6 |
| Pencil | H-F | 3H-4H | 3H-4H |
| **IMPACT (F/R)(in.lbs)** | 100/10 | 120/40 | 160/80 |
| **MEK RUBS** | 50/200 | 200+/200+ | 200+/200+ |
| **YELLOW INDEX** | -3.17 | -3.99 | -4.86 |

| **GLOSS** | | | |
|---|---|---|---|
| 60° | 17.0 | 51.8 | 92.0 |
| 20° | 4.0 | 12.2 | 61.3 |

| **APPEARANCE** | Textured | Textured | Orangepeel |
|---|---|---|---|
| | Many blisters | Some blisters | Blisters |
| | Pinholes | Some pinholes | Pinholes at 1 mil (25µm) |

**TABLE 3**

| **FILM AND RESISTANCE PROPERTIES - CURED AT 190°C FOR 20 MINUTES** | | | |
|---|---|---|---|
| **EXAMPLE** | 1 | 2 | 3 |
| **HARDNESS** | | | |
| Knoop | 15.8 | 14.3 | 15.4 |
| Pencil | 3H-4H | 2H-H | 3H-4H |
| **IMPACT (F/R)(in.lbs)** | 100/20 | 20/0 | 160/140 |
| **MEK RUBS** | 200+/200+ | 200+/200+ | 200+/200+ |
| **YELLOW INDEX** | -2.71 | -2.54 | -3.43 |

| **GLOSS** | | | |
|---|---|---|---|
| 60° | 88.7 | 99.0 | 93.0 |
| 20° | 59.0 | 89.0 | 80.0 |

| **APPEARANCE** | Smooth Orangepeel | Smooth Orangepeel | Smooth Orangepeel |
|---|---|---|---|
| | Pinholes at | Pinholes at | Pinholes at |
| | 1.7 mils (43 µm) | 1.5 mils (38µm) | 2 mils (51 µm) |

**TABLE 4**

| **FILM AND RESISTANCE PROPERTIES - CURED AT 175°C FOR 20 MINUTES** | | | |
|---|---|---|---|
| **COMP. EXAMPLE** | 1 | 2 | 3 |
| **HARDNESS** | | | |
| Knoop | 12.1 | 16.9 | 12.2 |
| Pencil | H-F | 3H-4H | HF-H |
| **IMPACT (F/R)(in.lbs)** | 110/35 | 120/40 | 160/80 |
| **MEK RUBS** | 50/200 | 200+/200+ | 200+/200+ |
| **YELLOW INDEX** | -3.10 | -3.28 | -4.26 |

| **GLOSS** | | | |
|---|---|---|---|
| 60° | 17.0 | 16.0 | 86.1 |
| 20° | 4.0 | 3.5 | 57.9 |

| **APPEARANCE** | Textured | Textured | Orangepeel |
|---|---|---|---|
| | Many blisters | Some blisters | Many Blisters |
| | Pinholes | Some pinholes | Pinholes at 1 mil (25 µm) |

**TABLE 5**

| **FILM AND RESISTANCE PROPERTIES - CURED AT 175°C FOR 20 MINUTES** | | | |
|---|---|---|---|
| **EXAMPLE** | 1 | 2 | 3 |
| **HARDNESS** | | | |
| Knoop | 16.0 | 14.9 | 15.4 |
| Pencil | 3H-4H | H-F | 2H-3H |
| **IMPACT (F/R)(in.lbs)** | 120/40 | 60/20 | 160/160 |
| **MEK RUBS** | 200+/200+ | 200+/200+ | 200+/200+ |
| **YELLOW INDEX** | -2.83 | -3.19 | -3.36 |

| **GLOSS** | | | |
|---|---|---|---|
| 60° | 87.1 | 43.4 | 38.6 |
| 20° | 65.9 | 56.7 | 49.5 |

| **APPEARANCE** | Smooth Orangepeel | Smooth Orangepeel | Smooth Orangepeel |
|---|---|---|---|
| | Pinholes at | Pinholes at | Pinholes at |
| | 1.7 mils (43 µm) | 1.9 mils (48 µm) | 2 mils (51 µm) |

**TABLE 6**

| **FILM AND RESISTANCE PROPERTIES OF EXAMPLE 4 CURED AT 175°C FOR 20 MINUTES** | | |
|---|---|---|
| | 175°C, 20 MINUTES | 190°C, 20 MINUTES |
| **HARDNESS** | | |
| Knoop | 17.2 | 16.9 |
| Pencil | 2H-3H | 2H-3H |
| **IMPACT (F/R)(in.lbs)** | 160/140 | 150/120 |
| **MEK RUBS** | 200+1200+ | 200+/200+ |
| **YELLOW INDEX** | -5.05 | -3.45 |

| **GLOSS** | | |
|---|---|---|
| 60° | 59.6 | 65.6 |
| 20° | 87.2 | 91.7 |

| **APPEARANCE** | Orangepeel | Orangepeel |
|---|---|---|
| | Pinholes at | Pinholes at |
| | 1.7 mils (43 µm) | 1.5 mils (38 µm) |

Although the present invention is described with reference to certain preferred embodiments, it is apparent that modifications and variations thereof may be made by those skilled in the art without departing from the scope of this invention as defined by the appended claims.

## Claims

1. A thermosetting powder coating composition comprising an active hydrogen groups-containing backbone resin, and a crosslinker component comprising an amino resin crosslinker, **characterized in that**:
(i) the active hydrogen groups-containing backbone resin component comprises a basic additive other than an alkoxymethyl melamine in an amount sufficient to provide a total resin acid number of less than 4 mg KOH/g resin, and
(ii) the amino resin of the crosslinker component is a solid tris-alkoxymethyl melamine crosslinking agent which is predominantly monomeric, comprises at least 40 wt% symmetrical tris-alkoxymethyl melamine, has a formaldehyde content in the range of from 2.8 to 3.2 moles of formaldehyde per mole of melanine, has a degree of etherification in the range of from 2.8 to 3.2, and has a free methylol content of less than 3 moles per 100 moles of melamine.

2. The thermosetting powder coating composition of claim 1, wherein the active hydrogen groups-containing backbone resin component comprises more than one active hydrogen groups-containing resins.

3. The thermosetting powder coating composition of claim 2, wherein the active hydrogen groups-containing backbone resin component further comprises said basic additive in an amount to provide a total resin acid number of less than 1 mg KOH/g resin.

4. The thermosetting powder coating composition of one of the previous claims, wherein the basic additive is selected from the group consisting of alkali metal salts, quaternary ammonium salts, quaternary phosphonium salts, sulfonium salts, amines, imines, amidines, guanadines and mixtures thereof.

5. The thermosetting powder coating composition of claim 4, wherein the basic additive is selected from the group consisting of quaternary ammonium salts, alkylated guanadines and mixture thereof.

6. The thermosetting powder coating composition of one of the previous claims, wherein the active hydrogen groups-containing backbone resin component comprises one or more hydroxyl functional resins.

7. The thermosetting powder coating composition of claim 6, wherein the hydroxyl functional resins have the following characteristics:
weight average molecular weights of from 750 to 7000,
hydroxyl numbers of from 20 to 100 mg KOH/g resin, and
glass transition temperatures of from 40°C to 150°C.

8. The thermosetting powder coating composition of claim 6, wherein the hydroxyl functional resins are selected from hydroxyl functional polyester resins and hydroxyl functional acrylic resins.

9. The thermosetting powder coating composition of one of the previous claims, comprising from 3 to 30 wt% of the crosslinker component, and from 70 to 97 wt% of the active hydrogen groups-containing resins, based on the combined weight of the crosslinker component and the active hydrogen groups-containing resins.

10. A method of coating a substrate comprising the steps of:
(a) applying onto the substrate the thermosetting powder coating composition according to any one of claims 1-9; then
(b) heat curing the so applied coating to form a substantially surface defect-free crosslinked film on the substrate.

11. An article coated with a substantially surface defect-free crosslinked film derived from the thermosetting powder coating composition according to any one of claims 1-9.

## Patentansprüche

1. Wärmehärtende Pulverbeschichtungszusammensetzung umfassend ein aktive Wasserstoffgruppen-haltiges Grundgerüstharz, und eine Vernetzerkomponente, welche einen Aminoharz-Vernetzer umfasst, **dadurch gekennzeichnet, dass**:
(i) die aktive Wasserstoffgruppen-haltige Grundgerüstharzkomponente ein von einem Alkoxymethylmelamin verschiedenen Basenzusatz umfasst, in einer zur Bereitstellung einer Gesamtharz-Säurezahl von kleiner als 4 mg KOH/g Harz ausreichenden Menge, und
(ii) das Aminoharz der Vernetzerkomponente ein festes Tris-Alkoxymethylmelamin-Vernetzungsmittel ist, welches vorwiegend monomer ist, wenigstens 40 Gew.-% symmetrisches Tris-Alkoxymethylmelamin umfasst, einen Formaldehyd-Gehalt im Bereich von 2,8 bis 3,2 Mol Formaldehyd pro Mol Melamin aufweist, einen Veretherungsgrad im Bereich von 2,8 bis 3,2 aufweist, und einen freien Methylolgehalt von weniger als 3 Mol pro 100 Mol Melamin aufweist.

2. Wärmehärtende Pulverbeschichtungszusammensetzung gemäss Anspruch 1, wobei die aktive Wasserstoffgruppen-haltige Grundgerüstharzkomponente mehr als ein aktive Wasserstoffgruppen-haltiges Harz umfasst.

3. Wärmehärtende Pulverbeschichtungszusammensetzung gemäss Anspruch 2, wobei die aktive Wasserstoffgruppen-haltige Grundgerüstharzkomponente desweiteren den Basenzusatz in einer Menge zur Bereitstellung einer Gesamtharz-Säurezahl von weniger als 1 mg KOH/g Harz umfasst.

4. Wärmehärtende Pulverbeschichtungszusammensetzung gemäss einem der vorhergehenden Ansprüche, wobei der Basenzusatz ausgewählt ist aus der Gruppe bestehend aus Alkalimetallsalzen, quaternären Ammoniumsalzen, quaternären Phosphoniumsalzen, Sulfoniumsalzen, Aminen, Iminen, Amidinen, Guanidinen und Gemischen davon.

5. Wärmehärtende Pulverbeschichtungszusammensetzung gemäss Anspruch 4, wobei der Basenzusatz ausgewählt ist aus der Gruppe bestehend aus quaternären Ammoniumsalzen, alkylierten Guanidinen und Gemischen davon.

6. Wärmehärtende Pulverbeschichtungszusammensetzung gemäss einem der vorhergehenden Ansprüche, wobei die aktive Wasserstoffgruppen-haltige Grundgerüstharzkomponente eines oder mehrere Hydroxyl-funktionelle Harze umfasst.

7. Wärmehärtende Pulverbeschichtungszusammensetzung gemäss Anspruch 6, wobei die Hydroxyl-funktionellen Harze die folgenden kennzeichnenden Eigenschaften aufweisen:
Gewichtsmittel-Molekulargewichte von 750 bis 7000,
Hydroxylzahlen von 20 bis 100 mg KOH/g Harz und
Glasübergangstemperaturen von 40 °C bis 150 °C.

8. Wärmehärtende Pulverbeschichtungszusammensetzung gemäss Anspruch 6, wobei die Hydroxyl-funktionellen Harze ausgewählt sind aus Hydroxyl-funktionellen Polyesterharzen und Hydroxyl-funktionellen Acrylharzen.

9. Wärmehärtende Pulverbeschichtungszusammensetzung gemäss einem der vorhergehenden Ansprüche, umfassend 3 bis 30 Gew.-% der Vernetzerkomponente und 70 bis 97 Gew.-% der aktive Wasserstoffgruppen-haltigen Harze, bezogen auf das kombinierte Gewicht der Vernetzerkomponente und der aktive Wasserstoffgruppen-haltigen Harze.

10. Verfahren zur Beschichtung eines Substrats umfassend die Schritte:
(a) Auftragen der wärmehärtenden Pulverbeschichtungszusammensetzung gemäss einem der Ansprüche 1 - 9 auf das Substrat; danach
(b) Wärmehärten der auf diese Weise aufgetragenen Beschichtung, wobei ein im wesentlichen Oberflächen-defektfreier, vernetzter Film auf dem Substrat gebildet wird.

11. Gegenstand, beschichtet mit einem im wesentlichen Oberflächen-defektfreien vernetzten Film, welcher von der wärmehärtenden Pulverbeschichtungszusammensetzung gemäss einem der Ansprüche 1 - 9 abstammt.

## Revendications

1. Composition de revêtement en poudre thermodurcissable comprenant une résine à chaîne principale contenant des groupes à atomes d'hydrogène actifs, et un composant agent de réticulation comprenant un agent de réticulation de résine de type aminé, **caractérisée en ce que**:
(i) le composant résine à chaîne principale contenant des groupes à atomes d'hydrogène actifs comprend un additif basique autre qu'une alcoxyméthylmélamine en quantité suffisante pour fournir un indice d'acide total de la résine inférieur à 4 mg de KOH/g de résine, et
(ii) la résine aminée du composant agent de réticulation est un agent de réticulation solide de type tris-alcoxyméthylmélamine qui est principalement monomère, qui comprend au moins 40% en poids de tris-alcoxyméthylmélamine symétrique, qui a une teneur en formaldéhyde dans la gamme de 2,8 à 3,2 moles de formaldéhyde par mole de mélamine, qui a un degré d'éthérification dans la gamme de 2,8 à 3,2, et qui a une teneur en méthylol libre inférieure à 3 moles pour 100 moles de mélamine.

2. Composition de revêtement en poudre thermodurcissable selon la revendication 1, dans laquelle le composant résine à chaîne principale contenant des groupes à atomes d'hydrogène actifs comprend plus d'une résine contenant des groupes à atomes d'hydrogène actifs.

3. Composition de revêtement en poudre thermodurcissable selon la revendication 2, dans laquelle le composant résine à chaîne principale contenant des groupes à atomes d'hydrogène actifs comprend en outre ledit additif basique en une quantité fournissant un indice d'acide total de la résine inférieur à 1 mg de KOH/g de résine.

4. Composition de revêtement en poudre thermodurcissable selon l'une quelconque des revendications précédentes, dans laquelle l'additif basique est choisi dans le groupe constitué par les sels de métaux alcalins, les sels d'ammonium quaternaire, les sels de phosphonium quaternaire, les sels de sulfonium, les amines, les imines, les amidines, les guanidines et leurs mélanges.

5. Composition de revêtement en poudre thermodurcissable selon la revendication 4, dans laquelle l'additif basique est choisi dans le groupe constitué par les sels d'ammonium quaternaire, les guanadines alkylées et leurs mélanges.

6. Composition de revêtement en poudre thermodurcissable selon l'une quelconque des revendications précédentes, dans laquelle le composant résine à chaîne principale contenant des groupes à atomes d'hydrogène actifs comprend une ou plusieurs résines à fonctions hydroxyle.

7. Composition de revêtement en poudre thermodurcissable selon la revendication 6, dans laquelle les résines à fonctions hydroxyle ont les caractéristiques suivantes:
- des masses moléculaires moyennes en poids de 750 à 7 000,
- des indices d'hydroxyle de 20 à 100 mg de KOH/g de résine, et
- des températures de transition vitreuse de 40°C à 150°C.

8. Composition de revêtement en poudre thermodurcissable selon la revendication 6, dans laquelle les résines à fonctions hydroxyle sont choisies parmi les résines de polyester à fonctions hydroxyle et les résines acryliques à fonctions hydroxyle.

9. Composition de revêtement en poudre thermodurcissable selon l'une quelconque des revendications précédentes, comprenant de 3 à 30% en poids du composant d'agent de réticulation, et de 70 à 97% en poids des résines contenant des groupes à atomes d'hydrogène actifs, par rapport au poids combiné du composant de réticulation et des résines contenant des groupes à atomes d'hydrogène actifs.

10. Procédé d'enduction d'un substrat comprenant les étapes consistant à:
(a) appliquer sur le substrat la composition de revêtement en poudre thermodurcissable selon l'une quelconque des revendications 1 à 9; puis
(b) durcir thermiquement le revêtement ainsi appliqué pour former un film réticulé essentiellement sans défauts superficiels sur le substrat.

11. Article revêtu du film réticulé essentiellement sans défauts superficiels dérivé de la composition de revêtement en poudre thermodurcissable selon l'une quelconque des revendications 1 à 9.
